# EUROPÄISCHE PATENTSCHRIFT

(11) **EP 1 086 169 B1**
(45) Veröffentlichungstag und Bekanntmachung des Hinweises auf die Patenterteilung: **11.02.2004**
(21) Anmeldenummer: 99916924.6
(22) Anmeldetag: 15.04.1999
(51) Int. Cl.: C08J 11/18

(54) **VERFAHREN ZUR HERSTELLUNG VON POLYOLEN SOWIE POLYOLE**
METHOD FOR PRODUCING POLYOLS AND POLYOLS
PROCEDE DE PRODUCTION DE POLYOLS, ET POLYOLS

(30) Priorität: 16.04.1998 DE 19817536
(43) Veröffentlichungstag der Anmeldung: 28.03.2001
(73) Patentinhaber: Behrendt, Gerhard, 12437 Berlin (DE)
(72) Erfinder: BEHRENDT, Gerhard, D-12437 Berlin (DE); POHL, Martin, D-12619 Berlin (DE)
(74) Vertreter: Gulde, Klaus W., Dipl.-Chem.
(86) Internationale Anmeldenummer: PCT/EP1999/002558
(87) Internationale Veröffentlichungsnummer: WO 1999/054392

(56) Entgegenhaltungen:
- DE-A- 2 541 100
- DE-A- 4 217 524
- GB-A- 2 272 445
- US-A- 3 708 440
- US-A- 3 738 946

## Beschreibung

Die Erfindung betrifft ein Verfahren zur Herstellung von Polyolen sowie Polyole gemäß dem Oberbegriff des Anspruches 1.

Es ist bekannt, Polyurethanschaumstoffabfälle durch niedermolekulare Glykole in Lösung zu bringen und auf diesem Wege Polyole für die Herstellung von Polyurethan-Hartschaumstoffen zu gewinnen. Ebenso ist bekannt, die Urethangruppe durch stark basische aliphatische Amine aufzuspalten und sie und in eine substituierte Harnstoffgruppe umzuwandeln.

Die US 4162995 lehrt z.B. die gleichzeitige Glykolyse und Ammonolyse von Polyurethanen durch Glykole, Polyole, Ammoniak oder Ammoniumhydroxid zu einem Polyolgemisch, in dem die entstehenden Amine entweder abgetrennt oder weiter umgesetzt werden. Nach dieser technischen Lösung ist ein zweiter Verfahrensschritt und nur die Verwendung von Ammoniak möglich. In der US 3404103 wird die gleichzeitige Alkoholyse und Ammonolyse unter Druck in Gegenwart von Methanol und Ammoniak bei erhöhter Temperatur zu einem Polyolgemisch und Aminen bzw. Harnstoffen, die nach der Spaltung der Makromoleküle abgetrennt werden, beschrieben. Zur Beschleunigung der Ammonolyse werden dem Reaktionsgemisch weitere stark basische Katalysatoren zugesetzt. Hier ist eine Druckstufe und die Aufarbeitung (Abtrennung des Methanols, der Katalysatoren und überschüssigen Ammoniaks) der Polyole vor der Weiterverarbeitung erforderlich. Die Katalyse der Glykolysereaktion durch tertiäre Amine wird z.B. in der (18) DE-PS 27 38 572 beschrieben. In der US 3708440 werden die Dialkanolamine zusammen mit aliphatischen Diolen zur Solvolyse von Polyurethan-Hartschaumstoffen und Polyisocyanuratschaumstoffen bei erhöhter Temperatur eingesetzt. In der US 4110266 wird die Umsetzung von Polyurethan-Hartschaumstoffen oder Polyisocyanuratschaumstoffen mit Alkanolaminen, der Abtrennung von deren Überschuß und die Verwendung des Reaktionsgemisches als Starter für Polyole beschrieben. In der US 3117940 wird die ausschließliche Verwendung primärer aliphatischer Amine zur Aminolyse von Polyurethanabfall beschrieben. DE-A-4 217 524 beschreibt ein Verfahren zur Herstellung von NCO-reaktiven Komponenten aus ausreagierten Produkten des Isocyanat-Polyadditions verfahrens. Es handelt sich um ein 2-Stufen-Verfahren auf Basis von Aminoverbindungen und mono- , di-, oder polyfunktionellen Alkoholen.

Die in den genannten Schriften beschriebenen Verfahren versuchen, die vergleichsweise geringe Basizität der Alkohole, Aminoalkohole bzw. des Ammoniaks nachteiligerweise durch den Zusatz weiterer Katalysatoren auszugleichen, um zu vertretbaren Reaktionszeiten bei der Spaltung der Polyurethane zu kommen.

Aufgabe der Erfindung ist es, ein verbessertes Verfahren zur Herstellung von Polyolen aus Polyurethanabfällen sowie danach hergestellte Polyole für die Polyurethanherstellung zur Verfügung zu stellen.

Erfindungsgemäß wird die Aufgabe dadurch gelöst, daß Polyurethan-Abfälle in ein Gemisch aus mindestens einem Diol und mindestens einem sekundären aliphatischen Alkylamin bei Temperaturen von 120 bis 220°C eingetragen und umgesetzt werden, wodurch ein Polyetheralkoholgemisch und ein in diesem gelöstes oder dispergiertes Gemisch von substituierten Polyharnstoffen gebildet wird.

Das Verhältnis von Diol zu Amin ist von mehreren Faktoren abhängig, wobei die (mittleren) Molmassen beider Reaktionskomponenten und die Art des Polyurethans die wichtigsten sind. Es sollte davon ausgegangen werden, daß das sekundäre Amin sowohl Katalysator der Depolymerisation als auch Reaktionskomponente ist und daher nicht überschüssig anwesend sein muß. Bezieht man das eingesetzte Amin auf Diol und Polyurethan, so sind Variationen in einem großen Bereich von Gewichtsverhältnissen möglich, die etwa zwischen 100 : 100 : 50 als untere Grenze und 100 : 25 : 5 als obere Grenze für das Verhältnis von Polyurethan : Diol : Amin liegen. Vorteilhaft ist der Bereich zwischen 100 : 50 : 25 und 100 : 25 : 6. Je nach Art des Polyurethans ist in diesem Bereich im Reaktionsprodukt praktisch kein freies Amin mehr enthalten, so daß nachfolgende Aufarbeitungsschritte vorteilhafterweise entfallen können.

Es wurde überraschend gefunden, daß sich Polyurethan-Abfälle insbesondere Polyurethanschaumstoff-Abfälle relativ schnell in Gemischen aus einem Diol und einem sekundären aliphatischen Alkylamin lösen und bei geeigneten Reaktandenverhältnissen zu Polyolgemischen führen, die zur Herstellung von halbharten Schaumstoffen, Hartschaumstoffen, Beschichtungsmassen oder Klebstoffen dienen können.

Insbesondere werden die Polyole dadurch hergestellt, daß Polyurethan-Weichschaumstoffe sukzessive in einem Gemisch aus einem niedermolekularen Polyalkylenglykol und einem sekundären aliphatischen Amin bei einer Temperatur zwischen 120 und 220°C umgesetzt werden. Alternativ kann das Verfahren dadurch ausgeführt werden, daß Polyurethan-Hartschaumstoffe sukzessive in einem Gemisch aus einem niedermolekularen Polyalkylenglykol und einem sekundären aliphatischen Amin bei einer Temperatur zwischen 120 und 220°C umgesetzt werden.

Weiterhin kann das erfindungsgemäße Verfahren mit Polyurethan-Elastomeren oder mikrozelligen Polyurethan-Elastomeren sukzessive in einem Gemisch aus einem Diol und mindestens einem sekundären aliphatischen Amin bei einer Temperatur zwischen 120 und 220°C umgesetzt werden, wobei das Gemisch aus Diol und Amin im Gewichtsverhältnis von 1:2 bis 1:9 und dieses Gemisch zum Polyurethan-Elastomeren im Gewichtsverhältnis bis 1:9 eingesetzt werden.

Besonders bevorzugt wird dabei die Ausführung des Verfahrens, nach der Polyurethane mit einem Gemisch aus einem Polyalkylenglykol der Molmasse 108 bis 600 und einem Di-n-alkylamin mit einer Kettenlänge der Alkylgruppen von 2 bis 6 bei 130 bis 200°C umgesetzt werden. Es werden vorzugsweise Polyalkylenglykol-Fraktionen mit einer mittleren Molmasse von 200, 300, 400 oder 600 verwendet, da diese sowohl gute Lösungseigenschaften für die Schaumstoffe und die aus den Urethangruppen entstehenden substituierten Harnstoffe haben als auch bei der Schaumstoffherstellung als Zellöffner dienen und die Qualität der Schaumstoffe bei den erfindungsgemäß verwendeten Konzentrationen verbessern.

Die Erfindung weist verschiedene Vorteile auf.

Die Kombination aus Glykolyse und Aminolyse beim Polyurethanrecycling führt zu einem völlig anderen Reaktionsverlauf der Depolymerisation der Polyurethane als die reine Glykolyse. Während bei der Glykolyse in erster Linie die Spaltung durch Umesterung an den Urethangruppen und als Nebenreaktion eine nucleophile Spaltung der Polyharnstoffe sowie eine Decarboxylierung der Urethangruppen, beide unter Bildung primärer aromatischer Amine, erfolgt, wird bei der Spaltung durch die Kombination von glykolischen Hydroxylgruppen und sekundären Aminogruppen die Urethangruppe zu einer trisubstituierten Harnstoffgrupe umgesetzt, während durch die basischen Reaktionsbedingungen eine nucleophile Reaktion an den Harnstoffgruppen der Polyharnstoffe nur in verschwindend geringem Maße erfolgt. Bei der Reaktion der Kombination aus Glykol und sekundärem Amin mit dem Polyurethan entstehen demzufolge im wesentlichen die langkettigen Polyether der Polyuretahne und die Polyharnstoffe aus der Isocyanatkomponente und dem sekundären aromatischen Amin, d.h. keine primären aromatischen Amine. Die Polyharnstoffe liegen in der Lösung aus niedermolekularem Glykol und langkettigem Polyetheralkohol gelöst und/oder dispergiert vor. Durch diese Reaktionsführung wird nicht nur eine völlig andere Zusammensetzung des Reaktionsgemisches erreicht, sondern die Einsatzmengen an Glykol können stark reduziert werden und betragen, wie die Beispiele zeigen, in der Regel nur 50 bis 20% der bei der reinen Gykolyse erforderlichen Mengen. Dadurch wird eine Zusammensetzung der Polyetherkomponente erreicht, die es erstmals durch direkte Umsetzung ohne zusätzliche Aufarbeitung des Recycling-Polyols erlaubt, elastische Produkte -Schaumstoffe und Elastomere, Verguß- und Beschichtungsmassen- herzustellen. Die Polyolkomponente mit überwiegendem Gehalt langkettiger Polyetheralkohole verschiebt nach Umsetzung mit Polyisocyanaten die Glasübergangstemperatur der Polyurethane zu niedrigen Werten, d.h. bei Zimmertemperatur in den elastischen Bereich, der durch den Anteil an niedermolekularen Diolen nicht zu wesentlich höheren Werten verschoben wird. Durch Auswahl der niedermolekularen Glykole entsprechend dem erfindungsgemäßen Verfahren hinsichtlich Art und Menge kann die untere und obere Einsatztemperatur bereits bei der Umsetzung gesteuert und vorbestimmt werden. Aus diesem Grunde wird als Glykolkomponente der Einsatz höhermolekularer als bisher üblicher Glykole vorgezogen, wobei die Propylenglykole, beginnend mit Dipropylenglykol, besonders geeignet sind, da ihre sekundären Hydroxylgruppen weniger reaktiv als die ansonsten üblichen primären der Ethylenglykolreihe sind und dadurch nahezu gleiche Reaktivitäten zu den Hydroxylgruppen der langkettigen Polyetheralkohole bestehen. Die erfindungsgemäßen Polyole haben daher gegenüber dem Stand der Technik eine Reihe von Vorzügen, die in ihren speziellen Eigenschaften und ihrer preisgünstigen Herstellung begründet liegen.

In einer weiteren Ausgestaltung der Erfindung können als wirtschaftlich besonders günstige Variante auch technisch rohe Amine oder Destillationsrückstände aus der Synthese von aliphatischen Aminen eingesetzt werden.

Die Erfindung wird anhand der folgenden Ausführungsbeispiele näher erläutert:

### Beispiel 1:

In einem 1 l-Sulfierkolben werden 100 g Diethylenglykol und 40 g Di-n-butylamin auf 140°C erwärmt. Unter ständigem Rühren werden innerhalb von zwei Stunden 125 g Polyurethan-Weichschaumstoff-Flocken zugesetzt. Anschließend wird die Temperatur auf 180°C erhöht und 30 Minuten gehalten. Danach wird abgekühlt und ggf. entgast. Es wird ein Polyol erhalten, das eine Hydroxylzahl von 365 mg KOH/g und eine Viskosität von 3.560 mPas (20°C) aufweist. Es ist zur Herstellung von Polyurethan-Hartschaumstoffen und halbharten Schaumstoffen geeignet.

### Beispiel 2:

In einem 1 l-Sulfierkolben werden 150 g Triethylenglykol und 35 g Di-n-butylamin auf 160°C erwärmt. Unter ständigem Rühren werden innerhalb von 2,5 Stunden 170 g Polyurethan-Weichschaumstoff-Flocken zugesetzt. Anschließend wird die Temperatur auf 195°C erhöht und 60 Minuten gehalten. Danach wird abgekühlt und ggf. entgast. Es wird ein Polyol erhalten, das eine Hydroxylzahl von 326 mg KOH/g und eine Viskosität von 4.820 mPas (20°C) aufweist. Es ist zur Herstellung von Polyurethan-Hartschaumstoffen und halbharten Schaumstoffen geeignet.

### Beispiel 3:

In einem 6 l-Sulfierkolben werden 600 g Diethylenglykol und 250 g Di-n-butylamin auf 160°C erwärmt. Unter ständigem Rühren werden innerhalb von drei Stunden 1750 g Polyurethan-Weichschaumstoff-Flocken zugesetzt. Anschließend wird die Temperatur auf 200°C erhöht und 120 Minuten gehalten. Danach wird abgekühlt und ggf. entgast. Es wird ein Polyol erhalten, das eine Hydroxylzahl von 382 mg KOH/g und eine Viskosität von 9.500 mPas (20°C) aufweist. Es ist zur Herstellung von Polyurethan-Hartschaumstoffen und halbharten Schaumstoffen geeignet.

### Beispiel 4:

In einem 6 l-Sulfierkolben werden 1000 g Polyethylenglykol 400 und 64 g Di-n-butylamin auf 150°C erwärmt. Unter ständigem Rühren werden innerhalb von zwei Stunden 1250 g Polyurethan-Weichschaumstoff-Flocken zugesetzt. Anschließend wird die Temperatur auf 190°C erhöht und drei Stunden gehalten. Danach wird abgekühlt und ggf. entgast. Es wird ein Polyol erhalten, das eine Hydroxylzahl von 326 mg KOH/g und eine Viskosität von 4.480 mPas (20°C) aufweist. Es ist zur Herstellung von Polyurethan-Hartschaumstoffen und halbharten Schaumstoffen geeignet.

### Beispiel 5:

In einem 2,5 l-Sulfierkolben werden 200 g Polyethylenglykol 400, 150 g Dipropylenglykol und 80 g Di-n-butylamin auf 150°C erwärmt. Unter ständigem Rühren werden innerhalb von vier Stunden 625 g Polyurethan-Weichschaumstoff-Flocken zugesetzt. Anschließend wird die Temperatur auf 210°C erhöht und 120 Minuten gehalten. Danach wird abgekühlt und ggf. entgast. Es wird ein Polyol erhalten, das eine Hydroxylzahl von 288 mg KOH/g und eine Viskosität von 1.880 mPas (20°C) aufweist. Es ist zur Herstellung von Polyurethan-Hartschaumstoffen und halbharten Schaumstoffen geeignet.

### Beispiel 6:

In einem 1 l-Sulfierkolben werden 150 g Polyethylenglykol 400, 50 g Dipropylenglykol und 70 g Di-n-butylamin auf 150°C erwärmt. Unter ständigem Rühren werden innerhalb von zwei Stunden 550 g Polyurethan-Weichschaumstoff-Flocken zugesetzt. Anschließend wird die Temperatur auf 200°C erhöht und 120 Minuten gehalten. Danach wird abgekühlt und ggf. entgast. Es wird ein Polyol erhalten, das eine Hydroxylzahl von 221 mg KOH/g und eine Viskosität von 5.640 mPas (20°C) aufweist. Es ist zur Herstellung von Polyurethan-Hartschaumstoffen und halbharten Schaumstoffen geeignet.

### Beispiel 7:

In einem 2,5 l-Sulfierkolben werden 290 g Dipropylenglykol und 45 g Di-n-butylamin auf 180°C erwärmt. Unter ständigem Rühren werden innerhalb von drei Stunden 750 g Polyurethan-Weichschaumstoff-Flocken zugesetzt. Anschließend wird die Temperatur auf 200°C erhöht und 120 Minuten gehalten. Danach wird abgekühlt und ggf. entgast. Es wird ein Polyol erhalten, das eine Hydroxylzahl von 290 mg KOH/g und eine Viskosität von 8.500 mPas (20°C) aufweist. Es ist zur Herstellung von Polyurethan-Hartschaumstoffen und halbharten Schaumstoffen geeignet.

### Beispiel 8:

In einem 2,5 l-Sulfierkolben werden 290 g Dipropylenglykol und 53 g Di-n-butylamin auf 150°C erwärmt. Unter ständigem Rühren werden innerhalb von drei Stunden 850 g Polyurethan-Weichschaumstoff-Flocken zugesetzt. Anschließend wird die Temperatur auf 210°C erhöht und 120 Minuten gehalten. Danach wird abgekühlt und ggf. entgast. Es wird ein Polyol erhalten, das eine Hydroxylzahl von 276 mg KOH/g und eine Viskosität von 4.200 mPas (20°C) aufweist. Es ist zur Herstellung von Polyurethan-Hartschaumstoffen und halbharten Schaumstoffen geeignet.

## Patentansprüche

1. Verfahren zur Herstellung von Polyolen durch Depolymerisation von Polyurethan-Abfällen in Gegenwart von hydroxylgruppenhaltigen Verbindungen bei höheren Temperaturen,
**dadurch gekennzeichnet,**
**daß** Polyurethan-Abfälle in ein Gemisch aus mindestens einem Diol und mindestens einem sekundären Alkylamin bei Temperaturen von 120° bis 220°C eingetragen und umgesetzt werden, wobei das Gemisch aus Diol und primären und/oder sekundären Alkylamin im Gewichtsverhältnis 1:1 bis 10:1 und dieses Gemisch zum Polyurethan im Gewichtsverhältnis bis 1:12 eingesetzt werden.

2. Verfahren nach Anspruch 1,
**dadurch gekennzeichnet,**
**daß** Polyurethan-Weichschaumstoffe sukzessive in einem Gemisch aus einem niedermolekularen Polyalkylenglykol und einem sekundären Alkylamin bei einer Temperatur zwischen 120° und 220°C umgesetzt werden, wobei das Gemisch aus Polyalkylenglykol und sekundärem Alkylamin im Gewichtsverhältnis 3:1 bis 10:1 und dieses Gemisch zum Polyurethan-Weichschaumstoff im Gewichtsverhältnis bis 1:12 eingesetzt werden.

3. Verfahren nach Anspruch 1,
**dadurch gekennzeichnet,**
**daß** Polyurethan-Hartschaumstoffe sukzessive in einem Gemisch aus einem niedermolekularen Polyalkylenglykol und einem sekundären Alkylamin bei einer Temperatur zwischen 120° und 220°C umgesetzt werden, wobei das Gemisch aus Polyalkylenglykol und sekundärem Alkylamin im Gewichtsverhältnis 1:1 bis 1:7 und dieses Gemisch zum Polyurethan-Hartschaumstoff im Gewichtsverhältnis bis 1:8 eingesetzt werden.

4. Verfahren nach Anspruch 1,
**dadurch gekennzeichnet,**
**daß** Polyurethan-Elastomere oder mikrozellige Elastomere sukzessive in einem Gemisch aus einem Diol und mindestens einem sekundären Alkylamin bei einer Temperatur zwischen 120° und 220°C umgesetzt werden, wobei das Gemisch aus Diol und sekundärem Alkylamin im Gewichtsverhältnis von 1:2 bis 1:9 und dieses Gemisch zum Polyurethan-Elastomeren im Gewichtsverhältnis bis 1:9 eingesetzt werden.

5. Verfahren nach Anspruch 1,
**dadurch gekennzeichnet,**
**daß** als Diole Diethylenglykol, Triethylenglykol, Tetraethylenglykol, Pentaethylenglykol oder Gemische davon oder Polyethylenglykole im Molmassebereich 180 bis 800 eingesetzt werden.

6. Verfahren nach Anspruch 1,
**dadurch gekennzeichnet,**
**daß** als Diole Oligopropylenglykole der Molmasse 134 bis 800 eingesetzt werden.

7. Verfahren nach Anspruch 1,
**dadurch gekennzeichnet,**
**daß** als primäre und/oder sekundäre Alkylamine technisch rohe Amine oder Destillationsrückstände aus der Synthese von aliphatischen Aminen eingesetzt werden.

8. Verfahren nach Anspruch 1,
**dadurch gekennzeichnet,**
**daß** Polyurethanschaumstoffe mit einem Gemisch aus einem oder mehreren Polyalkylenglykolen der Molmasse 108 bis 600 und einem Di-n-alkyl-amin mit einer Kettenlänge der Alkylgruppen von 2 bis 6 bei 130 bis 200°C umgesetzt werden.

9. Verfahren nach Anspruch 1,
**dadurch gekennzeichnet,**
**daß** als Amin Di-n-butylamin eingesetzt wird.

10. Polyole zur Herstellung von Polyurethanen,
**gekennzeichnet durch**
die Herstellung nach einem Verfahren gemäß der Ansprüche 1 bis 9.

11. Polyole nach Anspruch 10,
**dadurch gekennzeichnet,**
**daß** sie im wesentlichen aus einem Gemisch von hochmolekularen, mindestens difunktionellen Polyetheralkoholen, niedermolekularen, mindestens difunktionellen Polyalkylenglykolen, Di- und/oder Polyharnstoffen, tertiären Aminen und Polyethersilikonen bestehen.

12. Polyole nach Anspruch 10 oder 11,
**dadurch gekennzeichnet,**
**daß** sie aus einem Gemisch von nominell trifunktionellen Polyetheralkoholen der Molmasse 2500 bis 10.000, aus Diolen der Molmasse 108 bis 800, aus Di- und/oder Polyharnstoffen, tertiären Aminen und Polyethersilikonen bestehen.

13. Polyole nach einem der Ansprüche 1 bis 12,
**dadurch gekennzeichnet,**
**daß** sie zu 35 bis 60 Gew.-% aus nominell trifunktionellen Polyetheralkoholen, 5 bis 15 Gew.-% Diolen, 10 bis 20 Gew.-% Di- und/oder Polyharnstoffen, 0,001 bis 1 Gew.-% tertiären Aminen und 0,1 bis 5 Gew-% Polyethersilikonen bestehen.

## Claims

1. Process for the production of polyols by depolymerization of polyurethane wastes in the presence of hydroxyl compounds at elevated temperatures wherein the polyurethane wastes are introduced into a mixture comprising at least one diol and at least one secondary alkyl amine at a temperature in the range of 120°C to 220°C and reacted in said mixture where said mixture from diol(s) and secondary alkyl amine is used in a weight proportion of 1:1 to 10:1 and this mixture in a weight proportion to the polyurethanes up to 1:12.

2. Process according to claim 1 wherein elastic polyurethane foams are reacted gradually in a mixture of a low molecular weight poly (alkylene glycol) and a secondary alkyl amine at a temperature between 120°C and 220°C where the mixture of poly(alkylene glycol) and secondary alkyl amine is in the weight ratio between 3:1 to 10:1 and this mixture to the elastic polyurethane foam in the weight ratio up to 1:12.

3. Process according to claim 1 wherein rigid polyurethane foams are gradually reacted in a mixture of a low molecular weight poly (alkylene glycol) and a secondary alkyl amine at a temperature between 120°C and 220°C where the mixture of poly(alkylene glycol) and secondary alkyl amine is in the weight ratio between 1 : 1 and 1 : 7 and this mixture in the weight ratio to the rigid polyurethane foam in the weight ratio up to 1 : 8.

4. Process according to claim 1 wherein polyurethane elastomers or microcellular elastomers are gradually reacted in a mixture of a diol and a secondary alkyl amine at a temperature between 120°C and 220°C where the mixture of diol and secondary alkyl amine is in the weight ratio between 1 : 2 and 1 : 9 and this mixture in the weight ratio to the polyurethane elastomer in the weight ratio up to 1 : 9.

5. Process according to claim 1 wherein the diol is diethylene glycol, triethylene glycol, tetraethylene glycol, pentaethylene glycol or mixtures thereof or poly (ethylene glycols) in the molecular weight ratio between 180 and 800.

6. Process according to claim 1 wherein the diols are oligopropylene glycols of molecular weight 134 to 800.

7. Process according to claim 1 wherein the primary and/or secondary alkyl amines are crude technical amines or distillation residues from the synthesis of aliphatic amines.

8. Process according to claim 1 wherein polyurethane foams are reacted with a mixture comprising one or several poly (alkylene glycols) of molecular weight 108 to 600 and a di-n-alkyl amine with a chain length of the alkyl groups between 2 and 6 at temperatures between 130°C and 200°C.

9. Process according to claim 1 wherein the amine is di-n-butyl amine.

10. Polyols for the production of polyurethanes comprising being produced according to one of the claims 1 to 9.

11. Polyols according to claim 10 being **characterized** to be a mixture essentially comprising high molecular weight, at least difuctional poly (ether alcohols), low molecular weight, at least difunctional poly (alkylene glycols), di- and/or polyureas, tertiary amines, and polyether silicones.

12. Polyols according to claim 10 or 11 being **characterized** to be a mixture of nominally trifunctional poly(ether alcohols) of molecular weight 2,500 to 10,000, of diols of molecular weight 108 to 800, of di- and/or polyureas, of tertiary amines, and polyether silicones.

13. Polyols according to any claim 1 12 being **characterized** to comprise a mixture of 35 to 60 % by weight nominally trifunctional poly(ether alcohols), of 5 to 15 % by weight of diols, of 10 to 20 % by weight of di- and/or polyureas, of 0.001 to 1 % by weight of tertiary amines, and of 0.1 to 5 % by weight of poly (ether silicones).

## Revendications

1. Procédé de fabrication de polyols par dépolymérisation de déchets de polyuréthane en présence de composés contenant des groupes hydroxyles à haute température,
**caractérisé en ce que**
des déchets de polyuréthane sont ajoutés et transformés dans un mélange d'un diol au moins et d'une alkylamine secondaire au moins à température comprise entre 120 et 220 °C, le diol et l'alkylamine primaire et/ou secondaire étant mélangés selon un rapport de poids de 1:1 à 10:1, ledit mélange étant mis en oeuvre dans un rapport de poids jusqu'à 1:12 par rapport au polyuréthane.

2. Procédé selon revendication 1,
**caractérisé en ce que**
des mousses molles de polyuréthane sont successivement transformées dans un mélange d'un polyalkylène-glycol de faible poids moléculaire et d'une alkylamine secondaire à une température comprise entre 120 et 220 °C, le polyalkylène-glycol et l'alkylamine secondaire étant mélangés selon un rapport de poids de 3:1 à 10:1, ledit mélange étant mis en oeuvre dans un rapport de poids jusqu'à 1:12 par rapport à la mousse molle de polyuréthane.

3. Procédé selon revendication 1,
**caractérisé en ce que**
des mousses dures de polyuréthane sont successivement transformées dans un mélange d'un polyalkylène-glycol de faible poids moléculaire et d'une alkylamine secondaire à une température comprise entre 120 et 220 °C, le polyalkylène-glycol et l'alkylamine secondaire étant mélangés selon un rapport de poids de 1:1 à 1:7, ledit mélange étant mis en oeuvre dans un rapport de poids jusqu'à 1:8 par rapport à la mousse dure de polyuréthane.

4. Procédé selon revendication 1,
**caractérisé en ce que**
des élastomères de polyuréthane ou des élastomères microcellulaires sont successivement transformés dans un mélange d'un diol et d'une alkylamine secondaire au moins à une température comprise entre 120 et 220 °C, le diol et l'alkylamine secondaire étant mélangés selon un rapport de poids de 1:2 à 1:9, ledit mélange étant mis en oeuvre dans un rapport de poids jusqu'à 1:9 par rapport à l'élastomère de polyuréthane.

5. Procédé selon revendication 1,
**caractérisé en ce que**
du diéthylène-glycol, triéthylène-glycol, tétraéthylène-glycol, pentaéthylène-glycol ou des mélanges de ceux-ci, ou des polyéthylène-glycols sont mis en oeuvre comme diols dans une étendue de masse moléculaire comprise entre 180 et 800.

6. Procédé selon revendication 1,
**caractérisé en ce que**
des oligopropylène-glycols de masse moléculaire comprise entre 134 et 800 sont mis en oeuvre comme diols.

7. Procédé selon revendication 1,
**caractérisé en ce que**
des amines techniquement brutes ou des résidus de distillation provenant de la synthèse d'amines aliphatiques sont mis en oeuvre comme alkylamines primaires et/ou secondaires.

8. Procédé selon revendication 1,
**caractérisé en ce que**
des mousses de polyuréthane sont transformées avec un mélange d'un ou de plusieurs polyakylène-glycols de masse moléculaire comprise entre 108 et 600 et d'une di-n-alkyle-amine avec une longueur de chaîne des groupes alkyles de 2 à 6, à température comprise entre 130 et 200 °C.

9. Procédé selon revendication 1,
**caractérisé en ce que**
de la di-n-butylamine est mise en oeuvre comme amine.

10. Polyols pour la fabrication de polyuréthanes,
**caractérisés en ce que**
la fabrication suit un procédé selon les revendications 1 à 9.

11. Polyols selon revendication 10,
**caractérisés en ce qu'**
ils consistent essentiellement en un mélange de polyéther-alcools de poids moléculaire élevé, difonctionnels au moins, de polyalkylène-glycols de faible poids moléculaire, difonctionnels au moins, de dicarbamides et/ou polycarbamides, d'alumines tertiaires et de silicones de polyéther.

12. Polyols selon revendication 10 ou 11,
**caractérisés en ce qu'**
ils consistent en un mélange de polyéther-alcools nominalement trifonctionnels de masse moléculaire comprise entre 2500 et 10.000, de diols de masse moléculaire comprise entre 108 et 800, de dicarbamides et/ou polycarbamides, d'alumines tertiaires et de silicones de polyéther.

13. Polyols selon l'une des revendications 1 à 12,
**caractérisés en ce qu'**
ils consistent en polyéther-alcools nominalement trifonctionnels pour 35 à 60 % du poids, en diols pour 5 à 15 % du poids, en dicarbamides et/ou polycarbamides pour 10 à 20 % du poids, en amines tertiaires pour 0,001 à 1 % du poids et en silicones de polyéther pour 0,1 à 5 % en poids.
